# EUROPÄISCHE PATENTSCHRIFT

(11) **EP 1 452 377 B1**
(45) Veröffentlichungstag und Bekanntmachung des Hinweises auf die Patenterteilung: **03.01.2007**
(21) Anmeldenummer: 04003217.9
(22) Anmeldetag: 13.02.2004
(51) Int. Cl.: B60K 11/06

(54) **Kühleinrichtung für ein Kraftfahrzeug- Antriebsaggregat**
Cooling system for a vehicle drive unit
Système de refroidissement pour un motopropulseur de véhicule

(30) Priorität: 26.02.2003 DE 10308084
(43) Veröffentlichungstag der Anmeldung: 01.09.2004
(73) Patentinhaber: Dr.Ing. h.c.F. Porsche Aktiengesellschaft, 70435 Stuttgart (DE)
(72) Erfinder: Hochkönig, Manfred, 71696 Möglingen (DE); Wolf, Thomas, 64560 Riedstadt (DE); Sebastian, Bernd, 71272 Renningen (DE)

(56) Entgegenhaltungen:
- BE-A- 451 709
- CH-A- 233 331
- DE-A- 2 426 826
- DE-A- 4 339 936
- DE-A- 10 050 219
- DE-C- 747 681
- NL-C- 52 912

## Beschreibung

Die Erfindung bezieht sich auf eine Kühleinrichtung eines Kraftfahrzeug-Antriebsaggregats nach dem Oberbegriff des Anspruchs 1.

Aus der gattungsgemäßen DE 747 681 ist eine Kühleinrichtung gemäß dem Oberbegriff des Anspruchs 1 bekannt.

Aus der DE 37 16 701 A1 ist ein aerodynamisch ausgebildetes Verkleidungsteil für eine Unterseite eines Kraftfahrzeugs bekannt. Um oberhalb des Verkleidungsteiles liegende Aggregate und/oder Fahrwerksteile gezielt zu kühlen, ist ein Haltelement vorgesehen, das eine solche Form aufweist, daß die durch eine Eintrittsöffnung eintretende Kühlluft auf die Aggregate und/oder auf die Fahrwerksteile gerichtet wird.

Aufgabe der Erfindung ist es, eine verbesserte Kühleinrichtung für ein Kraftfahrzeug-Antriebsaggregat zu schaffen, mit der insbesondere bei einem Heckmotor eines Fahrzeugs eine wirkungsvolle Kühlwirkung auf die Brennkraftmaschine incl. Getriebeaggregate erzielbar ist.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, daß eine Zwei-Zonentemperaturschichtung, d. h., eine heiß-kalt-Schichtung durch eine breitflächige, langsam strömende Luftbewegung während der Fahrt erzielt wird und die Umgebung der zu kühlenden Aggregate großvolumig auf ein niedrigeres Temperaturniveau gebracht werden kann. Dies wird erreicht, indem einem Getriebegehäuse über Lufteinlässe im Verkleidungsteil eines Unterboden zugeführte Anströmluft zur Bildung einer kalten Luftschichtzone eine motorseitig gebildete wärmere Luftschichtzone überlagert ist. Zwischen beiden Zonen bildet sich eine sog. Temperaturtrennfläche, welche temporär etwa im Bereich der oberen Begrenzung des Getriebegehäuses und über einen unteren Teilbereich des am Getriebegehäuse anschließenden Motorgehäuses verläuft.

Damit viel Luftvolumen pro Zeiteinheit in die Umgebung der zu kühlenden Aggregate einzubringen ist und nicht nur Luft mit hoher Geschwindigkeit, ist nach der Erfindung ferner vorgesehen, daß in dem Verkleidungsteil des Unterbodens - in Fahrtrichtung gesehen - vorderseitig unterhalb des Getriebegehäuses Lufteinlaßöffnungen und rückseitig unterhalb des Motorgehäuses Luftabströmöffnungen im Aggregatebauraum angeordnet sind. Die Lufteinlaßöffnungen sind zu diesem Zweck breitflächig im Verkleidungsteil in einem vorderen Bereich unterhalb des Getriebegehäuses und die Luftabströmöffnungen sind in einem hinteren Bereich des Motorgehäuses angeordnet.

Mindestens eine weitere Lufteinlaßöffnung ist als Anströmkanal ausgebildet und im Verkleidungsteil des Unterbodens - in Bezug auf die Fahrtrichtung - hinter den Lufteinlaßöffnungen angeordnet und direkt einem Differential des Getriebes zugerichtet. Hierdurch wird in vorteilhafter Weise erreicht, daß beispielsweise ein hochwärmebelastetes Getriebeelement des Aggregates zusätzlich einem Kühlluftstrom aussetzbar ist und somit kein Wärmenest entstehen kann.

Zur gezielten Beeinflussung der warmen Luftschichtzone um den Motor herum ist im Aggregatebauraum dem Motor obenseitig ein Spülgebläse zugeordnet, das eine die warme Luftschichtzone beaufschlagende Druckluftzuführung aufweist. Bei kleinen Fahrgeschwindigkeiten dominiert die Strömung über das Spülgebläse, durch welches kalte Druckluft von außen in den Aggregateraum gedrückt wird. Der Wärmeanfall im Getriebebereich ist gering und somit auch die notwendige Kühlleistung, die über die kalte Druckluft sichergestellt wird.

Bei hohen Fahrgeschwindigkeiten wird dagegen die kalte Luftschichtzone in Abhängigkeit von der Fahrgeschwindigkeit des Fahrzeugs und von in die Lufteinlässe einströmende Luft, die warme Luftschichtzone nach oben verdrängt und ein Abfluß der Warmluft über die Luftabströmöffnungen erzielt.

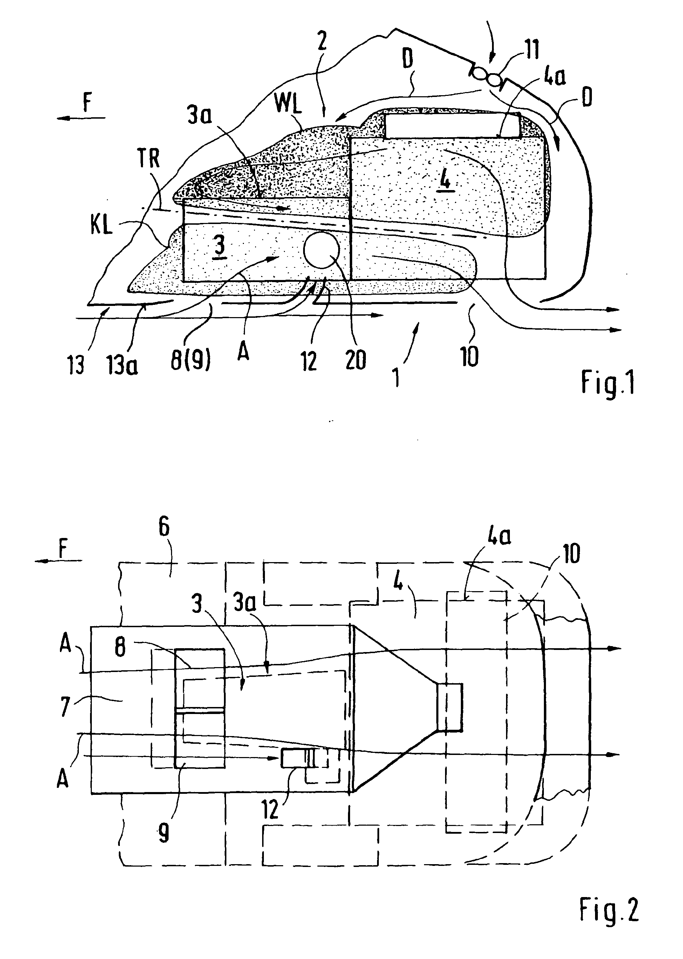

Ein Ausführungsbeispiel der Erfindung ist in den Zeichnungen dargestellt und wird im folgenden näher beschrieben.
Es zeigen
- Fig. 1: eine Darstellung des Antriebsaggregats von der Seite mit den von einer Temperaturtrennfläche abgegrenzten kalten und warmen Luftschicht und
- Fig. 2: eine Draufsicht auf das Antriebsaggregat im Aggregateraum mit der Darstellung von Lufteinströmöffnungen und Luftausströmöffnungen.

Es ist eine Kühleinrichtung 1 für ein Antriebsaggregat 2, insbesondere für ein heckseitig eines Fahrzeugs angeordnetes Antriebsaggregat, im wesentlichen bestehend aus einem Getriebe 3 mit unmittelbar verbundenem Motor 4 ausgebildet.

Das Antriebsaggregat 2 ist in einem Aggregateraum 6 angeordnet, wobei - in Fahrtrichtung F gesehen - das in einem Getriebegehäuse 3a angeordnete Getriebe 3 vorne und der in einem Motorgehäuse 4a angeordnete Motor 4 dahinter liegt. Über ein einen Unterboden 13 bildendes Verkleidungsteil 13a des Fahrzeugs ist das Antriebsaggregat 2 zum Aggregateraum 6 hin abgedeckt.

Das Verkleidungsteil 7 weist im vorderen Bereich des Getriebegehäuses 3a Lufteinlässe 8, 9 auf. Diese sind breitflächig ausgeführt, so daß eine langsam strömende Luftbewegung erzeugbar ist.

Im Bereich des hinteren Motorgehäuses 4a sind Luftabströmöffnungen 10 im Fahrzeugaufbau oder in einer Abdeckung vorgesehen. Oberhalb des Motorgehäuses 4a ist ein Sauggebläse 11 zur Zuführung von kalter Druckluft D in den Aggregateraum 6 angeordnet.

Damit eine gezielte Luftanströmung zusätzlich zu der Luftzuführung über die Lufteinlässe 8, 9 erfolgen kann, ist beispielsweise im Bereich eines Differentials 20 ein Anströmkanal 12 gebildet, über den die am Unterboden 13 entlangströmende Luft A dem Differential 20 unmittelbar zugeführt wird.

Die durch die Lufteinlässe 8, 9 im Verkleidungsteil 13a eintretende Luft A erzeugt eine kalte Luftschichtzone KL, die mit ihrem beispielsweise dargestellten Umriß das Getriebegehäuse 3a und den unteren Teil des Motors 4 umhüllt. Oberhalb dieser kalten Luftschichtzone KL ergibt sich durch die Wärme des Motors 4 eine darüber gelagerte warme Luftschichtzone WL, die ebenfalls mit ihrem beispielsweise dargestellten Umriß gezeigt ist. Zwischen diesen beiden Luftschichtzonen KL und WL ergibt sich eine sogenannte Temperaturtrennfläche TR, die sich temporär entsprechend den Temperaturverhältnissen heiß/kalt noch oben oder nach unten hin verschieben kann.

Es wird durch die Kühleinrichtung 1 eine breitflächig, langsam strömende Luftbewegung mit der Ausbildung eines Zwei-Zonenbereichs KL und WL erzielt. Die Umgebung der zu kühlenden Aggregate 3, 4 wird hierbei großvolumig auf ein niedrigeres Temperaturniveau gebracht.

Die Größe der kalten Luftschichtzone KL ist zudem wesentlich abhängig von der Fahrgeschwindigkeit des Fahrzeugs. Bei kleinen Fahrgeschwindigkeiten dominiert die Strömung über das Spülgebläse 11, der Wärmeanfall im Getriebebereich ist gering und somit auch die notwendige Kühlleistung. Bei hohen Fahrgeschwindigkeiten des Fahrzeugs mit hoher Getriebewärmeverlusten dominiert hingegen die Strömung durch die Unterbodenöffnungen 8, 9. Die kalte Luftschichtzone KL wird nach oben ausgeweitet und verdrängt somit die warme Luftschichtzone WL weiter nach oben. Die heiße Luft in diesem Bereich wird gezwungen den Aggregatebauraum 6 nach hinten unten durch Öffnungen 10 oder Freiräume in der Karosserie zu verlassen.

## Patentansprüche

1. Kühleinrichtung für ein Kraftfahrzeug-Antriebsaggregat, insbesondere für ein heckseitig eines Fahrzeugs angeordnetes Antriebsaggregat (2), wie einer Brennkraftmaschine (4) mit zugeordnetem Getriebe (3), wobei unterhalb des Antriebsaggregats (2) ein Verkleidungsteil (13a) als abdeckender Unterboden (13) des Fahrzeugaufbaus angeordnet ist, und über Lufteinlässe (8, 9) im Verkleidungsteil (13a) des Unterbodens (13) dem Antriebsaggregat (2) Anströmluft (A) zugeführt wird und in dem Verkleidungsteil (13a) des Unterbodens (13) - in Fahrtrichtung (F) gesehen - vorderseitig unterhalb des Antriebsaggregats (2) die Lufteinlassöffnungen (8, 9) und rückseitig unterhalb des Antriebsaggregats (2) Luftabströmöffnungen (1) im Aggregatebauraum (6) angeordnet sind, **dadurch gekennzeichnet, dass** die Zuführung der Anströmluft (A) über die Lufteinlassöffnungen (8, 9) erfolgt, die breitflächig im Verkleidungsteil (13a) in einem vorderen Bereich unterhalb eines Getriebegehäuses (3a) und Luftabströmöffnungen (10) in einem hinteren Bereich des Motorgehäuses (4a) angeordnet sind und mindestens eine weitere Lufteinlassöffnung als Anströmkanal (12) ausgebildet im Verkleidungsteil (13a) des Unterbodens (13) - in Bezug auf die Fahrtrichtung (F) - hinter den Lufteinlassöffnungen (8, 9) angeordnet und einem Differential (20) des Getriebes (3) zugerichtet ist und die Lufteinlassöffnungen (8, 9) sowie der Anströmkanal (12) derart die Anströmluft (A) in den Aggregatebauraum (6) führt, dass eine kalte Luftschichtzone (AL) gebildet wird, die von einer motorseitig gebildeten wärmeren Luftschichtzone (WL) überlagert ist und sich zwischen beiden Zonen (KL) und (WL) eine Temperaturtrennfläche (TR) bildet, welche temporär im Bereich der oberen Begrenzung des Getriebegehäuses (3a) und über einen unteren Teilbereich des am Getriebegehäuse (3a) anschließenden Motorgehäuses (4) verläuft.

2. Kühleinrichtung nach Anspruch 1, **dadurch gekennzeichnet, dass** im Aggregatebauraum (6) dem Motor (4) obenseitig ein Spülgebläse (11) zugeordnet ist, das eine die warme Luftschichtzone (WL) beaufschlagende Druckluftzuführung (D) aufweist.

3. Kühleinrichtung nach den Ansprüchen 1 oder 2, **dadurch gekennzeichnet, dass** die kalte Luftschichtzone (KL) in Abhängigkeit von der Fahrgeschwindigkeit des Fahrzeugs und von der in den Aggregateraum (6) in die Lufteinlässe (8, 9) einströmenden Luft, die warme Luftschichtzone (WL) nach oben verdrängend, vergrößerbar ist, und ein Abfluss der motorseitigen Warmluft über die Luftabströmöffnungen (10) erzielbar ist.

## Claims

1. A cooling system for a motor-vehicle drive assembly, especially for a drive assembly (2) arranged at the rear of a vehicle, such as that of an internal-combustion engine (4) with an associated transmission (3), wherein a panel part (13a) in the form of a covering underside (13) of the vehicle body is arranged underneath the drive assembly (2), and inflow air (A) is supplied to the drive assembly (2) via air inlets (8, 9) in the panel part (13a) of the underside (13), and in the panel part (13a) of the underside (13) - seen in the direction of travel (F) - the air inlet openings (8, 9) are arranged at the front end underneath the drive assembly (2) and air outlet openings (1) [*sic recte -* 10] are arranged at the rear end underneath the drive assembly (2) in the assembly installation space (6), **characterised in that** the inflow air (A) is supplied via the air inlet openings (8, 9) which are arranged over a broad area in the panel part (13a) in a front region underneath a transmission casing (3a), and air outlet openings (10) are arranged in a rear region of the engine casing (4a), and at least one further air inlet opening formed as an inflow duct (12) is arranged in the panel part (13a) of the underside (13) behind the air inlet openings (8, 9) - in relation to the direction of travel (F) - and faces a differential (20) of the transmission (3), and the air inlet openings (8, 9) and the inflow duct (12) guide the inflow air (A) into the assembly installation space (6) in such a way that a cold air layer zone (AL) [*sic recte -* KL] is formed which is superimposed by a warmer air layer zone (WL) formed on the engine side, and between the two zones (KL) and (WL) is formed a temperature dividing surface (TR) which extends temporarily in the region of the upper boundary of the transmission casing (3a) and over a lower region of the engine casing (4), which adjoins the transmission casing (3a).

2. A cooling system according to claim 1, **characterised in that** a scavenging blower (11) is associated with the upper side of the engine (4) in the assembly installation space (6) and has a compressed-air supply (D) acting upon the warm air layer zone (WL).

3. A cooling system according to claim 1 or claim 2, **characterised in that** the cold air layer zone (KL) is enlargeable as a function of the travelling speed of the vehicle and the air flowing into the air inlets (8, 9) and into the assembly space (6) and displaces the warm air layer zone (WL) upwards, and the warm air on the engine side is dischargeable via the air outlet openings (10).

## Revendications

1. Système de refroidissement pour un groupe motopropulseur de véhicule, en particulier pour un groupe motopropulseur (2) disposé à l'arrière d'un véhicule, tel un moteur à combustion interne (4) avec une boîte de vitesses (3) affectée, dans lequel, une pièce de carénage (13a) comme recouvrement de dessous de caisse (13) de la carrosserie du véhicule est disposée en dessous du groupe motopropulseur (2), et dans lequel, par l'intermédiaire d'orifices d'entrée d'air (8, 9) dans la pièce de carénage (13a) du recouvrement de dessous de caisse (13), de l'air affluent (A) est acheminé au groupe motopropulseur (2) et, dans la pièce de carénage (13a) du recouvrement de dessous de caisse (13) dans l'espace de montage (6) du groupe motopropulseur, vu dans le sens de la marche (F), les orifices d'entrée d'air (8, 9) sont disposés du côté avant en dessous du groupe motopropulseur (2) et des orifices de sortie de l'air (1) sont disposés du côté arrière en dessous du groupe motopropulseur (2), **caractérisé en ce que** l'arrivé de l'air affluent (A) s'effectue par les orifices d'entrée d'air (8, 9) qui sont disposés sur une large surface dans la pièce de carénage (13a) dans une zone avant en dessous d'un carter de boîte de vitesses (3a) et **en ce que** des orifices de sortie d'air (10) sont disposés dans une zone arrière du carter de moteur (4a) et **en ce qu'**au moins un autre orifice d'entrée d'air, configuré comme canalisation d'écoulement incident (12), est disposé dans la pièce de carénage (13a) du recouvrement de dessous de caisse (13), derrière les orifices d'entrée d'air (8, 9) par rapport au sens de la marche (F), et est dirigé vers un différentiel (20) de la boîte de vitesses (3), et **en ce que** les orifices d'entrée d'air (8, 9) ainsi que la canalisation d'écoulement incident (12) guident l'air affluent (A) dans l'espace de montage (6) du groupe motopropulseur de telle sorte qu'une zone de couche d'air froid (AL) est formée, qui est surmontée par une zone de couche d'air plus chaud (WL) formée côté moteur et qu'une surface de séparation de température (TR) se forme entre les deux zones (KL) et (WL), laquelle s'étend temporairement dans la zone de la limitation supérieure du carter de boîte de vitesses (3a) et au-dessus d'une zone partielle du carter de moteur (4) se raccordant au carter de boîte de vitesses (3a).

2. Système de refroidissement selon la revendication 1, **caractérisé en ce que**, dans l'espace de montage (6) du groupe motopropulseur, côté supérieur, une soufflante de balayage (11), qui comporte une amenée d'air sous pression (D) qui sollicite la zone de couche d'air chaud (WL), est affectée au moteur (4).

3. Système de refroidissement selon les revendications 1 ou 2, **caractérisé en ce que** la zone de couche d'air froid (KL), refoulant la zone de couche d'air chaud (WL) vers le haut en fonction de la vitesse de conduite du véhicule et de l'air entrant dans les orifices d'entrée d'air (8, 9) dans l'espace du groupe motopropulseur (6), peut être agrandie, et qu'une évacuation de l'air chaud côté moteur peut être obtenue par les orifices de sortie d'air (10).
